# EUROPEAN PATENT SPECIFICATION

(11) **EP 0 757 189 B1**
(45) Date of publication and mention of the grant of the patent: **21.11.2001**
(21) Application number: 96110829.7
(22) Date of filing: 04.07.1996
(51) Int. Cl.: F16H 3/66, F16H 57/10

(54) **Automatic transmission**
Automatisches Getriebe
Transmission automatique

(30) Priority: 31.07.1995 JP 19542495
(43) Date of publication of application: 05.02.1997
(73) Proprietor: AISIN AW CO., LTD., Anjo-shi Aichi-ken (JP)
(72) Inventor: Tsukamoto, Kazumasa, Anjo-shi, Aichi-ken, 444-11 (JP); Hayabuchi, Masahiro, Anjo-shi, Aichi-ken, 444-11 (JP); Nishida, Masaaki, Anjo-shi, Aichi-ken, 444-11 (JP); Ono, Kaoru c/o AISIN AW CO.,LTD, Anjo-shi, Aichi-ken, 444-11 (JP)
(74) Representative: VOSSIUS & PARTNER

(56) References cited:
- EP-A- 0 632 216
- US-A- 4 235 126

## Description

The present invention relates to an automatic transmission having a shifting gear system capable of changing transmission paths by a brake and a clutch stored in an integral case comprising a plurality of members including a transmission case and a cover, in particular, to the construction of the integral case preferable for mounting on a vehicle of F · F (front engine, front drive) type suited for a transversely-mounted engine, and more specifically to the construction of an integral case comprising a reaction force supporting member for the brake.

In general, an automatic transmission has a shifting gear system covered with a divided or integral case including a transmission case and a rear cover to maintain the sealed state. It is desirable to provide a multiple ranges such as five forward ranges in order to meet the requirement to improve fuel economy as well as driving performance. Also, compactness is required to improve mountability of the automatic transmission on the vehicle.

Hitherto, as described in US-A-5,470,284 (corresp. to EP-A-632216), the applicant has proposed an automatic transmission providing an automatic transmission having four ranges as a basic structure, achieved by combining a main transmission system having three forward ranges with a sub-transmission system having two ranges. Then, the applicant has slightly modified the sub-transmission system arranged on a second shaft to achieve three ranges therein, thereby to obtain five forward ranges as a whole, while ensuring reliability without driving the cost up by generalizing some parts.

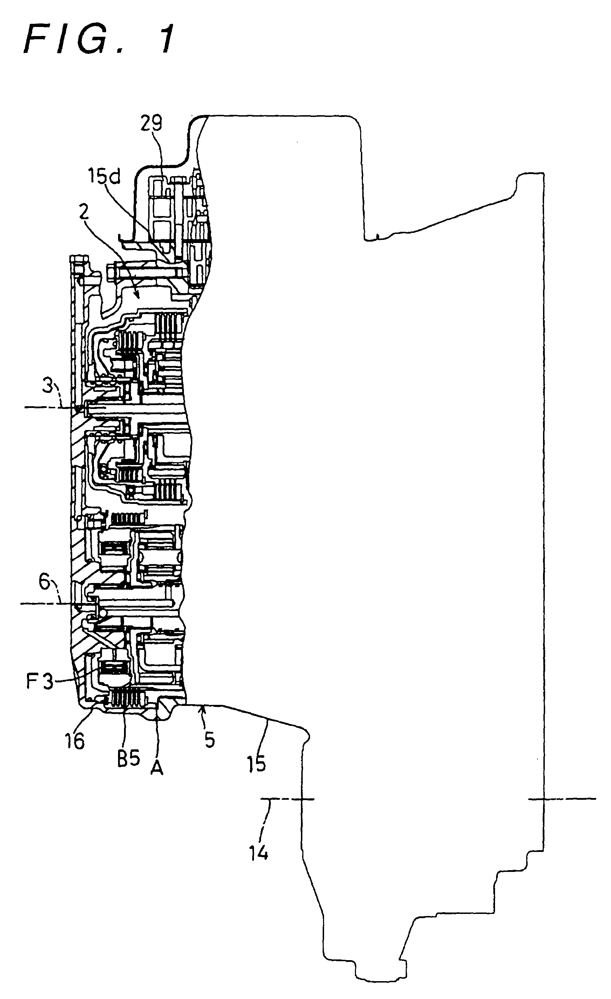

As shown in Fig. 1, the automatic transmission has a main transmission system 2 on a first shaft 3 as well as a sub-transmission system 5 on a second shaft 6 parallel to the first shaft 3. The main transmission system 2 provides shifting ranges including three forward ranges and one backward range, while the sub-transmission system 5 provides three forward ranges.

Further, a counter shaft comprising the second shaft 6 is coupled to a differential device via a gear, and the differential device is coupled to front wheels via left and right axles comprising a third shaft 14.

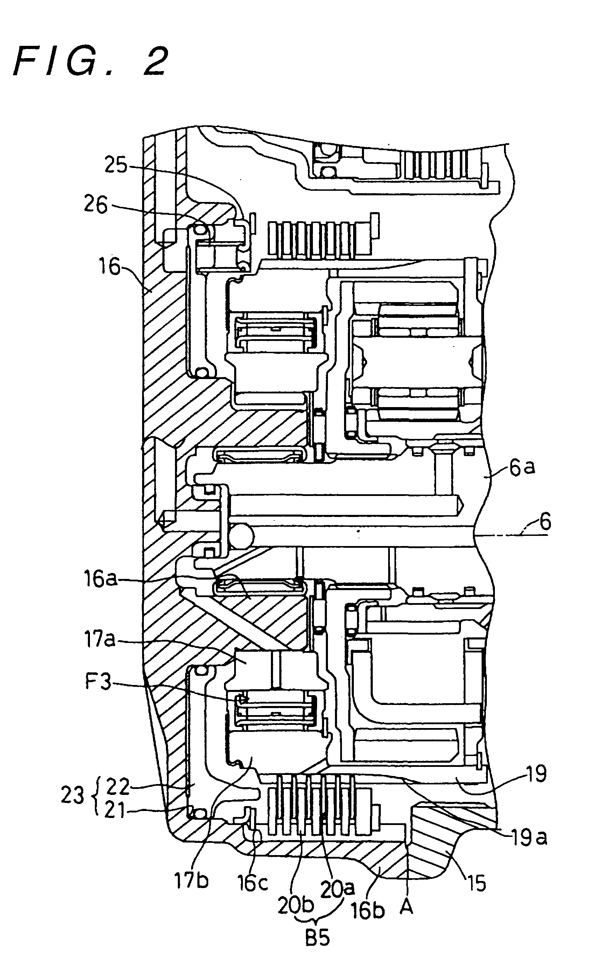

The main transmission system 2 and the sub-transmission system 5 are stored in an integral case comprising a transmission case 15 and a rear cover 16, and a fifth brake B5 and a third one-way clutch F3 of the sub-transmission system 5 are stored in the rear cover 16 portion. That is, as shown in Fig. 2 in detail, the rear cover 16 has a circular edge portion 16a protruding inwardly in the axial direction along the second shaft 6 portion, and an outer rim portion 16b extending concentrically with the second shaft 6 in the axial direction. An inner race 17a of the third one-way clutch F3 is fixed on the outer periphery of the edge portion 16a, and an outer race 17b thereof is formed integrally with a coupling member 19 extending from a carrier of a second planetary gear.

Further, a spline 19a is formed on the outer peripheral surface of the coupling member 19, and a spline 16c is formed on the inner peripheral surface of the above-mentioned outer rim portion 16b of the rear cover 16. The both splines have inner friction plates 20a and outer friction plates 20b fitted to each other to form a fifth brake B5 comprising a multi-plate brake. On the other hand, a circular cylinder 21 is formed between the edge portion 16a and the outer rim portion 16b of the above-mentioned rear cover 16 and a hydraulic servo 23 for the fifth brake is formed with a piston 22 to be fitted into the cylinder 21. Further, a return spring 26 of the above-mentioned hydraulic servo 23 is arranged in a compressed state between a spring bracket 25 securely fastened on the outer rim portion 16b by a snap ring and the back surface of the piston 22.

The above-mentioned automatic transmission can achieve five forward ranges with a sub-transmission system 5 providing three forward ranges disposed on the second shaft 6. However, since a fifth brake B5 and a third one-way clutch F3 are located on a rear cover 16 portion, the second shaft 6 portion is substantially as long as the first shaft 3 portion on which the main transmission system 2 is arranged.

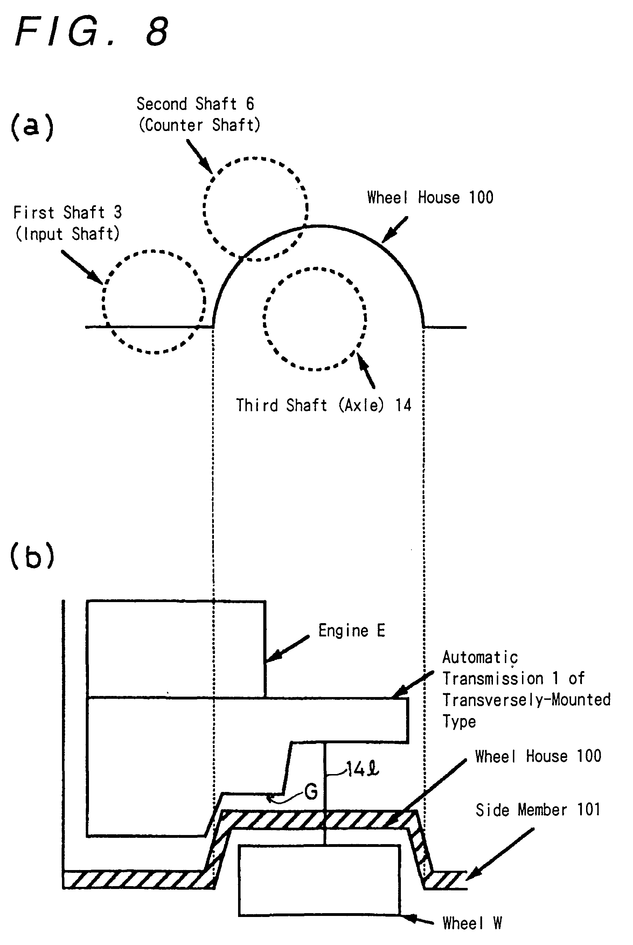

Since installation of a side member (see Fig. 8) to the side of the bonnet may result in interference of the second shaft 6 portion arranged on the top portion of the automatic transmission with the above-mentioned side member arranged alongside the wheel house, it is desirable to reduce the axial dimension of the second shaft 6 portion.

To meet the requirement to reduce the axial dimension of the second shaft (6) portion, given approximately the same axial length of the rear cover 16, the joint plane A of the rear cover 16 and the transmission case 15 is relocated toward the edge portion, that is, in the direction of the torque converter. Thus, the transmission case 15 can be realized with a reduced axial dimension.

However, since there is a need to mount a valve body 29 with a hydraulic control device installed therein in the case 15, it is difficult to form a mounting portion 15d for mounting a valve body 29 of a predetermined length in the above-mentioned transmission case 15 with a reduced axial dimension. This problem is solved with the features of the claims.

On the other hand, it might be considered to form a valve body mounting portion extending from the transmission case 15 to the rear cover 16, or specially design a valve body mounting portion protruding in the transmission case 15. However, as for the former case, it is extremely troublesome to locate and fix the case 15 and the cover 16 in order to form a mounting portion providing a completely flat surface from the transmission case 15 to the rear cover 16. Besides, such design is undesirable in terms of sealability and stability. As for the latter case, such design might result in a complicated manufacturing process of the transmission case 15 and ruin the compactness thereof.

On the contrary, if the axial dimension of the rear cover 16 has been reduced given substantially the same axial length of the transmission case 15, the friction plates of a (fifth) brake should be disposed in the transmission case side, and the hydraulic servo thereof in the rear cover side as disclosed in JP-U-6-69510. However, in this case, in operating the brake by causing the piston of the hydraulic servo to press the friction plates, a detaching force is applied to the joint plane A of the rear cover and the transmission case. Thus, the durability of the joint plane A, which needs to be sealed and maintained precisely, might be ruined.

Accordingly, an object of the present invention is to provide an automatic transmission which could eliminate the above-mentioned disadvantages, wherein a case arranged on the side in which a hydraulic servo is installed (such as a rear cover) is realized with a reduced axial dimension, and the pressing force from the hydraulic servo is received on the case side.

This object is achieved with the features of the claims.

### [Operation]

According to the above-mentioned construction, rotation from the engine (E) is shifted and transmitted to the output members (151, 15r) by selectively changing the transmission paths of the shifting gear units (7, 9, 10, 11) by means of the friction engagement means (C..., B..., F...).

When the brake means (B5) is in function in a certain range state, a hydraulic pressure is applied to the hydraulic servo (77). The piston (76), whose reaction force is supported by the cylinder (75), is caused to extend to press-fit the inner and outer friction plates (71)(72). Then, the inner and outer friction plates are brought into contact with a certain rotating element (such as the carrier CR4 of the second simple planetary gear 11) to stop rotation thereof. In this case, a detaching force based on the hydraulic pressure arises between the cylinder (75) as a reaction force supporting member and the extending portion (16f) to which the pressing force from the piston (76) is applied. However, since the cylinder (75) and the extending portion (16f) are both formed in the second case member (16), said force is confined within said second case member (16) without being applied to the first case member (15).

Numerals in the parentheses used hitherto are not intended to limit the construction of the present invention but to allow easy reference to the accompanying drawings.

Fig. 1 is a partially sectional side view illustrating a prior art.

Fig. 2 is an enlarged sectional side view illustrating the back edge portion of the second shaft of the prior art of Fig. 1.

Fig. 3 is a partially sectional side view illustrating an embodiment of the present invention.

Fig. 4 is an enlarged sectional side view illustrating the back edge portion of the second shaft according to the embodiment of the present invention of Fig. 3.

Fig. 5 is a sectional view cut along the V-V line of Fig. 4.

Fig. 6 is a skeleton diagram of an embodiment of the present invention.

Fig. 7 is a table showing the operation of the embodiment of Fig. 6.

Fig. 8 is a diagram illustrating the state with an automatic transmission according to the present invention mounted on the front portion of a vehicle; (a) is a side view, and (b) is a plan view.

Hereinafter embodiments of the present invention will be explained with reference to drawings.

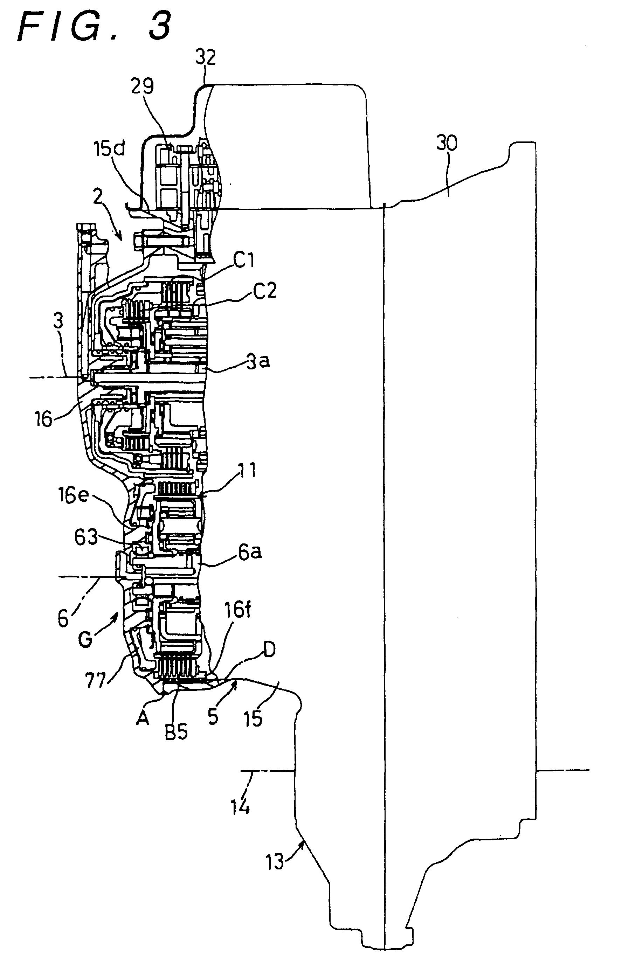

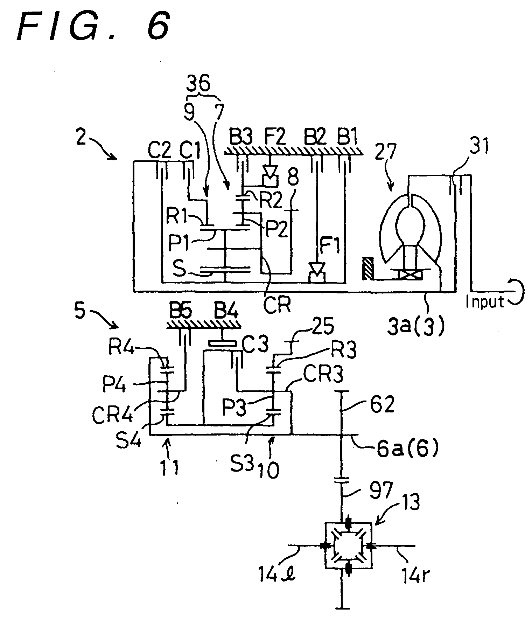

A five range automatic transmission 1 comprises a torque converter 27, a three range main transmission system 2, a three range sub-transmission system 5 and a differential 13 as illustrated in Fig. 3 and Fig. 6, and these portions are stored in an integral case comprising a transaxle housing 30, a transmission case 15 and a rear cover 16 joined to each other integrally. Besides, the torque converter 27 is provided with a lock-up clutch 31, and power is transmitted from an engine crank shaft to the inside of the main transmission system 5 by means of hydraulic flow in the torque converter 27 or mechanical engagement of the lock-up clutch 31. A first shaft 3 (concretely, an input shaft 3a) aligned to the crank shaft, a second shaft 6 (counter shaft 6a) parallel to the first shaft 3, and a third shaft 14 (left and right shafts 141, 14r) are rotatably supported by the integral case. A valve body 29 is mounted outside the case as well as covered with a valve case 32 in the oil-sealed state.

As illustrated in Fig. 6, the automatic transmission system 5 has a planetary gear unit 36 comprising a simple planetary gear 9 and a double pinion planetary gear 7. The simple planetary gear 9 consists of a sun gear S comprising a long gear, a ring gear R1, and a carrier CR supporting a pinion P1 comprising a long pinion in engagement with said gears. The double pinion planetary gear 7 consists of the common sun gear S, a ring gear R2, and the common carrier CR supporting the pinion P1 as a common pinion in engagement with the sun gear S and a pinion P2 in engagement with the ring gear R2 so that the both pinions P1, P2 are in mutual engagement. The both planetary gears 7, 9 comprise the common sun gear S, formed integrally to provide a common carrier CR, and further, the pinion P1 comprises a long pinion.

The input shaft 3a associated with the engine output shaft via the torque converter 27 can be coupled to the ring gear 9 of the simple planetary gear 9 via the first (forward) clutch C1 as well as can be coupled to the common sun gear S via the second (direct) clutch C2. Moreover, the sun gear S can be stopped directly by the first brake B1 as well as can be stopped by the second brake B2 via the first one-way clutch F1. Further, the ring gear R2 of the double pinion planetary gear 7 can be stopped by the third brake B3 and the second one-way clutch F2. The common carrier CR is coupled to the counter drive gear 8 to provide the output member of the main transmission system 5.

On the other hand, in the sub-transmission system 5 as illustrated in Fig.3 and Fig. 6, an output gear 62, a first simple planetary gear 10 and a second simple planetary gear 11 are arranged in order in the axial direction of the counter shaft 6a comprising the second shaft 6 toward the rear side. The counter shaft 6a is rotatably supported by a bearing 63 in the housing 30 and the inner peripheral side of the edge portion 16e of the rear cover 16.

Moreover, in the first simple planetary gear 10, the ring gear R3 is coupled to the above-mentioned counter driven gear 25, and the sun gear S3 is rotatably supported by the counter shaft 6a. The pinion P3 is supported by the carrier CR3 comprising a flange integrally coupled to the counter shaft 6a, and the carrier CR3 supporting the other end of the pinion P3 is coupled to the inner hub of the UD direct clutch C3. Moreover, in the second simple planetary gear 11, the sun gear S4 is coupled to the above-mentioned sun gear S3 of the first simple planetary gear 10, and the ring gear R4 is coupled to the counter shaft 6a.

The UD direct clutch C3 is interposed between the above-mentioned carrier CR3 of the first simple planetary gear 16 and the above-mentioned coupled sun gears S3, S4. The coupled sun gears S3, S4 can be stopped by the fourth brake B4 comprising a band brake. Further, the carrier CR4 supporting the pinion P4 of the second simple planetary gear can be stopped by the fifth brake B5.

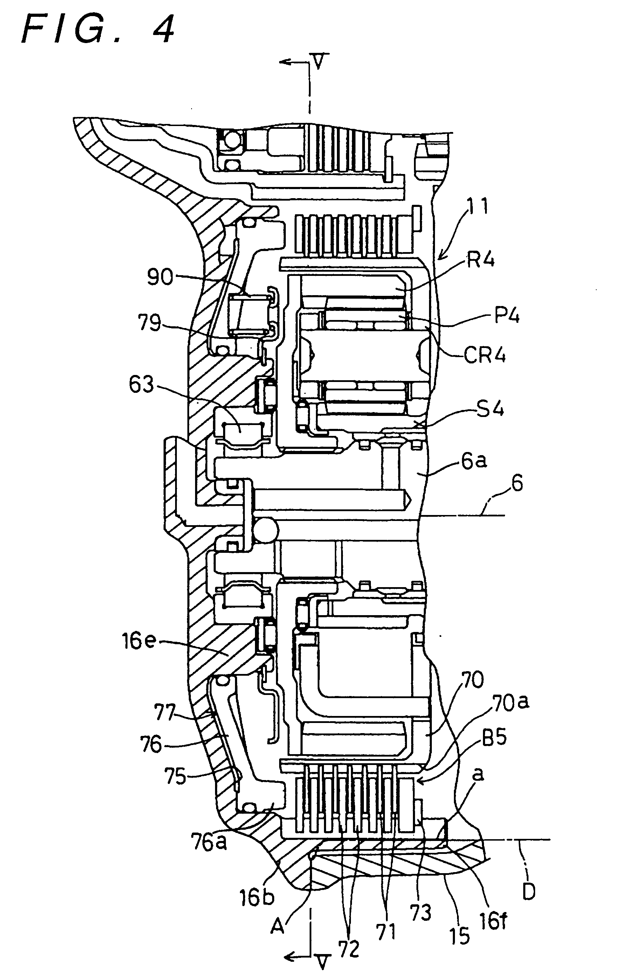

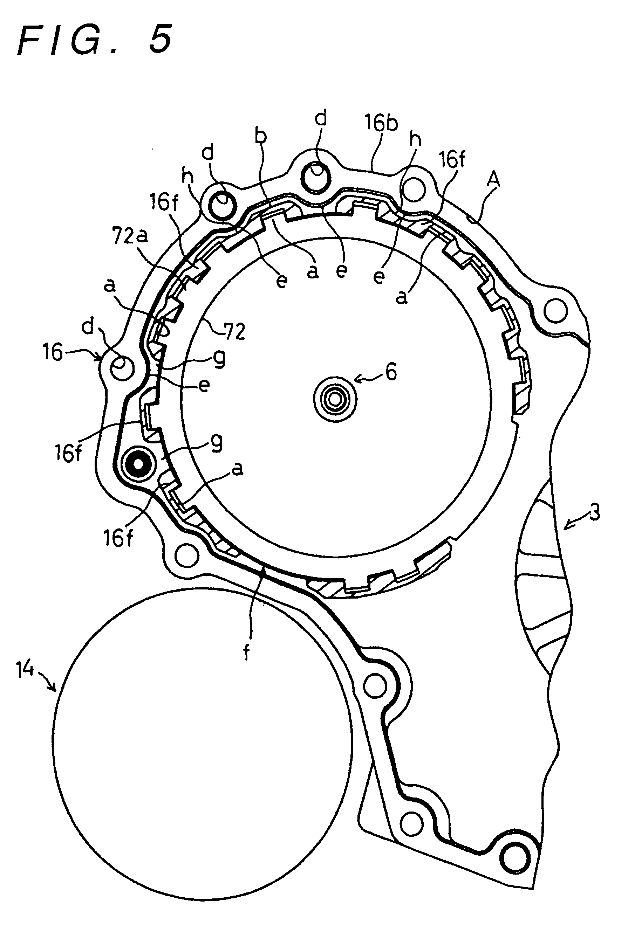

On the other hand, in the rear cover 16 as illustrated in Fig. 4, a circular edge portion 16e supporting a roller bearing 63 for supporting the above-mentioned counter shaft is formed concentrically with the second shaft 6. An extending portion 16f protruding from the joint plane A to the inside of the transmission case 15 is further formed at the inner peripheral side of the outer rim portion 16b. The extending portion 16f is formed to provide a substantially circular shape along the inner peripheral side of the outer rim portion 16b as shown in Fig. 5. Also, a number of spline grooves a are formed on the inner peripheral surface of the extending portion 16f as illustrated in Fig. 5. Besides, the extending portion 16f is provided along the outer periphery thereof with convex and concave portions, forming the above-mentioned spline grooves a. The convex portions b are arranged to avoid thick portions e of the rear cover 16 and the transmission case 15 provided for holes d for joining the rear cover 16 and the transmission case 15. The portion opposing to the third shaft 14 of the substantially circular portion 16f of the above-mentioned extending portion 16f is notched, and the notch portion f serves to prevent interference with the drive shaft for front wheels (third shaft) 14, which will be described later (see Fig. 8).

As illustrated in Fig. 4, the fifth brake B5, which is arranged at substantially the same position as the above-mentioned second simple planetary gear 11 in the axial direction and radially outwardly of the ring gear R4, comprises a multi-plate brake having a plurality of inner friction plates 71 and outer friction plates 72 alternately arranged. A spline formed on the inner peripheral surface of the inner friction plates 71 is in engagement with a spline 70a formed on the outer peripheral surface of the above-mentioned inner hub 70, and the spline teeth 72a (see Fig. 5) formed on the outer peripheral surface of the outer friction plates 72 are in engagement with the above-mentioned spline grooves a of the extending portion 16f. Moreover, the inner hub 70 of the fifth brake B5 extends from the above-mentioned carrier CR of the fourth simple planetary gear 11 in the radial direction as well as in the axial direction radially outwardly of the ring gear R4. Thus the inner hub 70 is substantially aligned to the fourth simple planetary gear 11 in the axial direction. A snap ring 73 is fitted to the edge portion of the extending portion 16f, securing the inner and outer friction plates 71, 72 of the fifth brake B5.

A cylinder 75 is formed in a circular space between the above-mentioned edge portion 16e and the extending portion 16f of the rear cover 16. A piston is fitted to the cylinder 75 in the oil-sealed state, and a circular projecting portion 76a formed on the back surface radially outwardly of the piston 76 is arranged to be opposed to the multi-plate brake of the fifth brake B5, forming a hydraulic servo 77 for the brake. A fitting member made of metal material 79 is securely fitted to the outer peripheral surface of the edge portion 16e of the rear cover with a snap ring. A return spring 90 is arranged in the compressed state between the fitting member 79 and the back surface of the above-mentioned piston 76.

Moreover, a differential device 13 is arranged on the third shaft 14 comprising the front axle as illustrated in Fig. 6. The differential device 13 distributes rotation from the output gear 62 to the left and right front wheel axles 141, 14r.

Since the fifth brake B5 is arranged radially outwardly of the second simple planetary gear 11, and the fifth brake B5 and the third one-way clutch F3 are not arranged to the rear edge side with respect to the second simple planetary gear 11 unlike the prior art as shown in Fig. 2, the sub-transmission system 5, which is arranged on the second shaft 6, can be made shorter in the axial direction. Accordingly, the rear cover 16 is formed, as shown in Fig.3, to provide the second shaft 6 portion shorter in the axial direction than the conventional one as shown in Fig. 1. Thus, part of the rear cover 16 is concave with respect to the first shaft 3 portion on which the main transmission system 2 is arranged.

Fig. 8 (b) is a plan view illustrating installation of the transversely-mounted engine E and the transverse type automatic transmission 1 on a vehicle, in which a side member 101 is arranged on the side surface of the bonnet along the wheel house 100 for the wheels W. Fig. 8 (a) is a side view illustrating the relationship between the first shaft (input) 3, the second shaft (counter shaft) 6 and the third shaft (axle) 14 of the automatic transmission 1 and the above-mentioned wheel house 100. As mentioned above, the automatic transmission 1 according to this embodiment has a concave portion in the second shaft 6 portion of the rear cover 16. Thus the concave portion G is arranged at the wheel house 100 portion in the plan view, preventing interference with the side member 101. Further, since the above-mentioned notch portion f of the extending portion 16f of the rear cover 16 concentrically arranged with the second shaft 6 is located opposite to the third shaft 14, the corresponding portion of the transmission case 15 can be formed smaller in the radial direction in the side view (see the chain line D shown in Fig. 3 and Fig. 4) to prevent interference with the axle (third shaft) 141, or the like.

The joint plane A of the rear cover 16 and the transmission case 15 is arranged substantially at the same position as the conventional one as illustrated in Fig. land Fig. 2. Thus, despite a shortly dimensioned automatic transmission, the second shaft portion in particular, the transmission case 15 has substantially the same length as the conventional one in the axial direction as well as provides a mounting portion 15d for the valve body 29 similar to the conventional one.

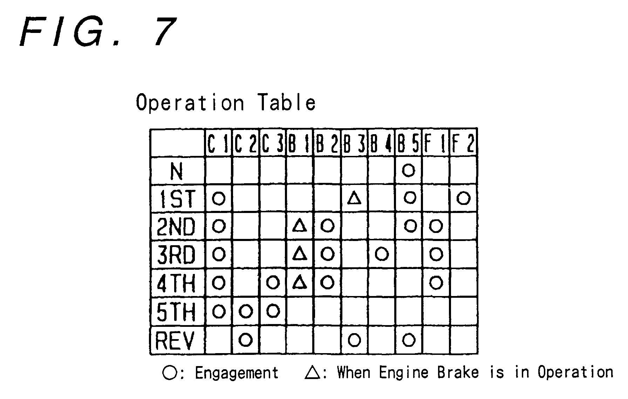

Now, operation of the present embodiment will be explained. Fig. 6 illustrates a skeleton of the above-mentioned automatic transmission 1. Fig. 7 is an operation table of clutches, brakes and one-way clutches.

In the first range (1ST) state, since the forward clutch C1 is engaged, the second one-way clutch F2 and the fifth brake B5 operate to maintain the ring gear R2 of the double pinion planetary gear and the carrier CR4/the sun gear S3 of the second simple planetary gear 11 in the stopped state. In this state, since rotation of the input shaft 3a is transmitted to the ring gear R1 of the simple planetary gear via the forward clutch C1, and the ring gear R2 of the double pinion planetary gear is in the stopped state, the common carrier CR rotates at a drastically reduced rate in the positive direction while idling the sun gear S in the reverse direction. That is, the main transmission system 2 is in the first range state, and the reduced rotational rate is transmitted to the ring gear R3 of the first simple planetary gear in the sub-transmission system 5 via the counter gears 8, 25. The carrier CR4 of the second simple planetary gear is stopped by the fifth brake B5 to achieve the first range state in the sub-transmission system 5. Thus the above-mentioned reduced rotational rate of the main transmission system 2 is further reduced by the sub-transmission system 5 to be outputted from the output gear 62.

In the second range (2ND) state, in addition to the forward clutch C1, the second brake B2 is in operation. Then, operation is switched from the second one-way clutch F2 to the first one-way clutch F1, and the fifth brake B5 is maintained in the operating state. In this state, the common sun gear S is stopped by the second brake B2 and the first one-way clutch F1. Thus, the rotation of the ring gear R1 of the simple planetary gear transmitted from the input shaft 3a via the forward clutch C1 causes the carrier CR to rotate at a reduced rate in the positive direction while idling the ring gear R2 of the double pinion planetary gear in the positive direction. Besides, the main transmission system 2 is in the second range state and the sub-transmission system 5 is in the first range state owing to the engagement of the fifth brake B5. As a result, the combination of the second range state with the first range state achieves the second range state in the automatic transmission 1 as a whole.

In the third range (3RD) state, the forward clutch C1, the second brake B2 and the first one-way clutch F1 are maintained in the engaged state, with the fifth brake B5 released and the fourth brake B4 engaged. That is, no alteration is made as to the main transmission system 2, and the above-mentioned rotation in the second range state is transmitted to the sub-transmission system 5 via the counter gears 8, 25. In the sub-transmission system 5, rotation from the ring gear R3 of the first planetary gear is outputted from the carrier CR3 as the second range rotation owing to the fixation of the sun gear S3. Thus, the combination of the second range state of the main transmission system 2 with the second range state of the sub-transmission system 5 achieves the third range state in the automatic transmission 1 as a whole.

In the fourth range (4TH) state, the main transmission system 2 is in the same state as the second and third range states mentioned above, with the forward clutch C1, the second brake B2 and the first one-way clutch F1 engaged. In the sub-transmission system 5, the fourth brake B4 is released and the UD direct clutch C3 is engaged. In this state, the ring gear R3 of the first simple planetary gear and the sun gears S4, S3 are coupled to provide lock-up rotation, namely, integral rotation of the planetary gears 10, 11. Therefore, the combination of the second range state of the main transmission system 2 with the lock-up (third range ) state of the sub-transmission system allows the fourth range rotation to be outputted from the output gear 12 in the automatic transmission 1 as a whole.

In the fifth range (5TH) state, since the forward clutch C1 and the direct clutch C2 are engaged, rotation of the input shaft 3 is transmitted to the ring gear R1 of the simple planetary gear and to the sun gear S, the main transmission system 2 provides lock-up rotation, namely, integral rotation of the gear unit. Moreover, the sub-transmission system 5 provides lock-up rotation with the UD direct clutch C3 engaged. Consequently, the combination of the third range (lock-up) state of the main transmission system 2 with the third range (lock-up) state of the sub-transmission system 5 allows the fifth range rotation to be outputted from the output gear 12 in the automatic transmission 1 as a whole.

In the reverse (REV) state, the direct clutch C2 and the third brake B3 are engaged as well as the fifth brake B5 is engaged. In this state, since rotation of the input shaft 3a is transmitted to the sun gear S via the direct clutch C2, and the ring gear R2 of the double pinion planetary gear is in the stopped state by the third brake B3, the carrier CR is caused to rotate in the reverse direction, while idling the ring gear R1 of the simple planetary gear in the reverse direction. Then, the reverse rotation is transmitted to the sub-transmission system 5 via the counter gears 8, 25. In the sub-transmission system 5, the carrier CR4 of the second simple planetary gear is stopped with respect to the reverse rotational direction as well by the fifth brake B5 to be maintained in the first range state. Accordingly, the combination of the reverse rotation of the main transmission system 2 with the first range rotation of the sub-transmission system 5 allows reduced rotational rate in the reverse direction to be obtained from the output shaft 62.

Operating state of the engine brake is denoted by triangle marks as shown in Fig. 7. That is, in the first range state, the third brake B3 is engaged to fix the ring gear F2 of the double pinion planetary gear instead of the second one-way clutch F2. In the second, third, and fourth range states, the first brake B1 is engaged to fix the sun gear S instead of the first one-way clutch F1.

Then rotation of the above-mentioned output gear 62 is transmitted to the differential device 13 via the ring gear 97 and further distributed by the differential device to the left and right front wheels W via the left and right axles 141, 14r. according to the load imposed on the wheels W.

Moreover, in the above-mentioned first, second, reverse, and neutral (N) range states, the fifth brake B5 is in the operating state. In these states, the piston 76 is caused to extend-based on the hydraulic pressure applied to the hydraulic chamber of the hydraulic servo 77, press-fitting the inner and outer friction plates. 71, 72 via the protruding portion 76a. The above-mentioned hydraulic reaction force is applied to the cylinder 75 formed in the rear cover 16, while the pressing force from the above-mentioned piston 76 is applied to the extending portion 16f via the inner/ outer friction plates 71, 72 and the snap ring 73. In this case, since both the cylinder 75 and the extending portion 16f are formed in the rear cover 16, the above-mentioned pressing force based on the hydraulic pressure is confined to the inside of the cover 16 without being applied to the joint plane A or the like.

Although a fifth range automatic transmission has been explained in the above-mentioned embodiment, the present invention is not limited thereto but also applicable to those provided with a sub-transmission system of a different type, those having brake means in the main transmission system, further, an automatic transmission having four or more than five ranges, and a vertically-mounted automatic transmission for FR.

### Effects of the Invention

As heretofore mentioned, according to the present invention, the hydraulic cylinder is formed in the second case member and the extending portion protruding toward the inside of the first case member is securely fitted to the outer friction plates. Therefore, regardless of the reduced axial dimension of the second case member, the pressing force caused by the operation of the brake means can be confined to the inside of the second case member without imposing any load on the joint plane of the first and second case members. Thus, the joint plane is maintained in a desirable state over a long period of time.

Further, along with the reduction of the axial dimension of the second case member, even if the entire automatic transmission, the second shaft portion in particular may be shortly dimensioned, a valve body mounting portion can be ensured in the first case member without shortening the first case member. Thus the precise and secure mounting of the valve body can be achieved with a simple construction without sacrificing the compactness of the automatic transmission.

Moreover, by providing the second case member as a rear cover, the cylinder of the hydraulic servo can be formed easily. As a result, shortening of the axial dimension of the automatic transmission is ensured.

Further, in applying the present invention to an automatic transmission of a transversely-mounted type comprising the first, second, and third shafts, the mountability of the automatic transmission can be improved owing to the reduction of the axial dimension.

Moreover, with the main shifting gear units arranged on the first shaft and the sub-shifting gear units on the second shaft, while enabling multi-stage shifting such as five forward ranges, the axial dimension of the second shaft portion can be reduced by arranging the above-mentioned brake means on the sub-shifting gear units. Accordingly, although the second shaft portion is located at a position which would otherwise tend to cause interference with the side member arranged alongside the wheel house, such interference is reliablly prevented. Thus, the mountability of the automatic transmission on the vehicle can be improved.

Besides, by providing the sub-shifting gear units of so-called "Simpson type" comprising the first and second simple planetary gears and arranging the above-mentioned brake means aligned to the second simple planetary gear in the axial direction and radially outwardly of the ring gear, the second shaft portion can be shortened. Also, the mountability of the automatic transmission on the vehicle can be improved by preventing interference with the above-mentioned side member.

Further, by notching part of the circular portion to form a notch portion in the above-mentioned extending portion, and forming the notch portion opposing to the third shaft (claim 6), the second shaft portion opposing to the third shaft can be radially shortened. Thus, interference with the axle (the third shaft) is prevented and the mountability of the automatic transmission on the vehicle is improved.

## Claims

1. An automatic transmission comprising an input member (3a) associated with an engine (E), output members (14l, 14r) associated with wheels, shifting gear units (7, 9, 10, 11) interposed between the input member and the output members to shift and transmit rotation from the input member to the output members via a plurality of transmission paths, friction engagement means (C1, C2, C3, B1, B2, B3, B4, B5, F1, F2) including at least one brake means (B5) for changing the transmission paths of said shifting gear units, a valve body (29) with a hydraulic control device for controlling the friction engagement means installed therein, and a case having at least first and second case members (15, and 16, respectively) to store the shifting gear units and the friction engagement means by integrally joining said both case members on the joint plane (A), wherein the brake means (B5) comprises a multi-plate brake having a plurality of inner friction plates (71) and outer friction plates (72) arranged alternately and a hydraulic servo (77) consisting of a piston (76) pressing the multi-plate brake into the operating state and a cylinder slidably accomodating the piston, the first case member (15) has a mounting portion (15d) for mounting the valve body (29), the second case member (16) comprising a cylinder (75) for the hydraulic servo (77) is provided with an extending portion (16f) protruding to the inside of the first case member (15) beyond the joint plane (A), the outer friction plates (72) of the multi-plate brake are unrotatably fitted to the extending portion of the second member.

2. The automatic transmission according to claim 1, wherein the first case member is a transmission case (15) and the second case member is a rear cover (16) for closing the rear end of the transmission case (15).

3. The automatic transmission according to claim 1 or 2, wherein the automatic transmission is a transversely-mounted type having a first shaft (3) aligned to an output shaft of a transversely-mounted engine, a second shaft (6) arranged parallel to the first shaft (3), and a third shaft (14) aligned to a front axle.

4. The automatic transmission according to claim 1, 2 or 3, wherein the shifting gear units are provided with main shifting gear units (7, 9) arranged on the first shaft (3) and sub-shifting gear units (10, 11) arranged on the second shaft (6), and the transmission paths of the sub-shifting gear units (10, 11) are changed by means of the brake means (B5).

5. The automatic transmission according to claim 4, wherein the sub-shifting gear units comprise first (10) and second (11) simple planetary gears, sun gears (S3, S4) of the first and second simple planetary gears are coupled integrally, a carrier (CR3) of the first simple planetary gear (10) and a ring gear (R4) of the second simple planetary gear (11) are coupled integrally a ring gear o the second simple planetary gear are coupled integrally to each other as well as to the output member, the ring gear (R3) of the first simple planetary gear (10) is coupled to the output portion (8) of the main-shifting gear units (7, 9), the friction engagement means for changing the transmission paths of the sub-shifting gear units is provided with a third clutch (C3) interposed between the integrally coupled carrier/ ring gear (CR3/R4) and the integrally coupled sun gears (S3, S4), a fourth brake (B4) for selectively stopping the integrally coupled sun gears (S3, S4), and a fifth brake (B5) for selectively stopping the carrier (CR4) of the second simple planetary gear (11), and the fifth brake (B5) comprising a brake means is arranged substantially aligned to the second simple planetary gear (11) in the axial direction and radially outwardly of the ring gear (R4).

6. The automatic transmission according to claim 3 or 5, wherein the extending portion (16f) is arranged concentrically with the second shaft (6), comprising a spline fitting portion of a substantially circular shape to form a spline (a) on the inner peripheral surface, said portion of a substantially circular shape is notched to form a notch portion (f), a spline (72a) formed at the outer peripheral surface of the outer friction plates (72), is fitted to said spline fitting portion, and the third shaft (14) is arranged to be opposed to the notch portion.

## Patentansprüche

1. Automatisches Getriebe mit einem Eingangsglied (3a), das mit einem Motor (E) verbunden ist, Ausgangsgliedern (14l, 14r), die mit Rädern verbunden sind, Schaltgetriebeeinheiten (7,9,10,11), die zwischen dem Eingangsglied und den Ausgangsgliedern angeordnet sind, um eine Rotation vom Eingangsglied über mehrere Übertragungswege auf die Ausgangsglieder zu schalten und zu übertragen, Reibungseingriffseinrichtungen (C1,C2,C3,B1,B2,B3,B4,B5,F1,F2), die mindestens eine Bremseinrichtung (B5) zum Wechseln der Übertragungswege der Schaltgetriebeeinheiten aufweisen, einem Ventilkörper (29) mit einer hydraulischen Steuervorrichtung zur Steuerung der darin installierten Reibungseingriffseinrichtungen, und einem Gehäuse mit mindestens ersten und zweiten Gehäusegliedern (15 bzw. 16), um die Schaltgetriebeeinheiten und die Reibungseingriffseinrichtungen unterzubringen, indem beide Gehäuseglieder an der Verbindungsebene (A) integral verbunden werden, wobei die Bremseinrichtung (B5) eine Mehrscheibenbremse mit mehreren abwechselnd angeordneten inneren Reibungsscheiben (71) und äußeren Reibungsscheiben (72) und ein hydraulisches Servoelement (77) aufweist, das aus einem Kolben (76), der die Mehrscheibenbremse in den Betätigungszustand drückt, und einem Zylinder besteht, der verschiebbar den Kolben beherbergt, das erste Gehäuseglied (15) einen Befestigungsabschnitt (15d) zur Befestigung des Ventilkörpers (29) aufweist, das zweite Gehäuseglied (16), das einen Zylinder (75) für das hydraulische Servoelement (77) aufweist, mit einem Erweiterungsabschnitt (16f) versehen ist, der zum Inneren des ersten Gehäusegliedes (15) über die Verbindungsebene (A) hinaus vorsteht, und die äußeren Reibungsscheiben (72) der Mehrscheibenbremse nicht drehbar an den Erweiterungsabschnitt des zweiten Gliedes angebracht sind.

2. Automatisches Getriebe nach Anspruch 1, wobei das erste Gehäuseglied ein Getriebegehäuse (15) ist und das zweite Gehäuseglied ein hinterer Deckel (16) zum Verschließen des hinteren Endes des Getriebegehäuses (15) ist.

3. Automatisches Getriebe nach Anspruch 1 oder 2, wobei das automatische Getriebe ein quer eingebauter Typ mit einer ersten Welle (3), die zu einer Ausgangswelle eines quer eingebauten Motors ausgerichtet ist, einer zweiten Welle (6), die parallel zur ersten Welle (3) ausgerichtet ist, und einer dritten Welle (14) ist, die zu einer Vorderachse ausgerichtet ist.

4. Automatisches Getriebe nach Anspruch 1, 2 oder 3, wobei die Schaltgetriebeeinheiten mit Haupt-Schaltgetriebeeinheiten (7,9), die an der ersten Welle (3) angeordnet sind, und Unter-Schaltgetriebeeinheiten (10,11) versehen sind, die an der zweiten Welle (6) angeordnet sind, und die Übertragungswege der Unter-Schaltgetriebeeinheiten (10,11) mittels der Bremseinrichtung (B5) gewechselt werden.

5. Automatisches Getriebe nach Anspruch 4, wobei die Unter-Schaltgetriebeeinheiten erste (10) und zweite (11) Einfachplanetengetriebe aufweisen, Sonnenräder (S3,S4) der ersten und zweiten Einfachplanetengetriebe integral gekoppelt sind, ein Träger (CR3) des ersten Einfachplanetengetriebes (10) und ein Hohlrad (R4) des zweiten Einfachplanetengetriebes (11) integral miteinander als auch mit dem Ausgangsglied gekoppelt sind, das Hohlrad (R3) des ersten Einfachplanetengetriebes (10) mit dem Ausgangsabschnitt (8) der Haupt-Schaltgetriebeeinheiten (7,9) gekoppelt ist, die Reibungseingriffseinrichtungen zum Wechseln der Übertragungswege der Unter-Schaltgetriebeeinheiten mit einer dritten Kupplung (C3), die zwischen dem integral gekoppelten Träger/Hohlrad (CR3,R4) und den integral gekoppelten Sonnenrädern (S3,S4) angeordnet ist, einer vierten Bremse (B4) zum selektiven Anhalten der integral gekoppelten Sonnenräder (S3,S4) und einer fünften Bremse (B5) zum selektiven Anhalten des Trägers (CR4) des zweiten Einfachplanetengetriebes (11) versehen sind, und die fünfte Bremse (B5), die eine Bremseinrichtung aufweist, im wesentlichen zum zweiten Einfachplanetengetriebe (11) in die axiale Richtung ausgerichtet und radial zum Hohlrad (R4) nach außen angeordnet ist.

6. Automatisches Getriebe nach Anspruch 3 oder 5, wobei der Erweiterungsabschnitt (16f) konzentrisch mit der zweiten Welle (6) angeordnet ist, der einen Schiebekeil-Paßabschnitt mit im wesentlichen kreisförmiger Gestalt aufweist, um einen Schiebekeil (a) an der inneren Umfangsfläche zu bilden, der Abschnitt mit im wesentlichen kreisförmiger Gestalt gekerbt ist, um einen Kerbabschnitt (f) zu bilden, ein Schiebekeil (72a), der an der äußeren Umfangsfläche der äußeren Reibungsscheiben (72) ausgebildet ist, am Schiebekeil-Paßabschnitt angepaßt ist, und die dritte Welle (14) so angeordnet ist, daß sie dem Kerbabschnitt gegenüberliegt.

## Revendications

1. Transmission automatique comprenant un élément d'entrée (3a) associé à un moteur (E), des éléments de sortie (141, 14r) associés à des roues, des unités de roues de changement (7, 9, 10, 11) intercalées entre l'élément d'entrée et les éléments de sortie pour changer et transmettre la rotation de l'élément d'entrée aux éléments de sortie via une pluralité de chemins de transmission, un moyen d'engagement par friction (C1, C2, C3, B1, B2, B3, B4, B5, F1, F2) comportant au moins un moyen formant frein (B5) pour changer les chemins de transmission desdites unités de roues de changement, un corps de vanne (29) avec un dispositif de commande hydraulique pour commander le moyen d'engagement par friction qui y est installé, et un carter ayant au moins un premier et un deuxième éléments de carter (15 et 16, respectivement) pour stocker les unités de roues de changement et le moyen d'engagement par friction en reliant intégralemnet lesdits deux éléments de carter sur le plan de joint (A), le moyen formant frein (B5) comprenant un frein multidisque ayant une pluralité de disques de friction intérieurs (71) et de disques de friction extérieurs (72) agencés alternativement et une servocommande hydraulique (77) consistant en un piston (76) qui presse le frein multidisque pour le mettre dans l'état de marche et en un cylindre recevant le piston à coulissement, le premier élément de carter (15) comportant une partie de montage (15d) pour monter le corps de vanne (29), le deuxième élément de carter (16) comprenant un cylindre (75) pour la servocommande hydraulique (77) étant muni d'une partie étendue (16f) faisant saillie jusqu'à l'intérieur du premier élément de carter (15) au-delà du plan de joint (A), les disques de friction extérieurs (72) du frein multidisque étant montés de manière non rotative sur la partie étendue du deuxième élément.

2. Transmission automatique selon la revendication 1, dans laquelle le premier élément de carter est un carter de transmission (15) et le deuxième élément de carter est un couvercle arrière (16) servant à fermer l'extrémité arrière du carter de transmission (15).

3. Transmission automatique selon la revendication 1 ou 2, dans laquelle la transmission automatique est du type à montage transversal ayant un premier arbre (3) aligné à un arbre de sortie d'un moteur transversal, un deuxième arbre (6) agencé parallèlement au premier arbre (3), et un troisième arbre (14) aligné sur un essieu avant.

4. Transmission automatique selon la revendication 1, 2 ou 3, dans laquelle les unités de roues de changement sont munies d'unités de roues de changement principal (7, 9) agencées sur le premier arbre (3) et d'unités de roues de changement secondaire (10, 11) agencées sur le deuxième arbre (6), et les chemins de transmission des unités de roues de changement secondaire (10, 11) sont changés à l'aide du moyen formant frein (B5).

5. Transmission automatique selon la revendication 4, dans laquelle les unités de roues de changement secondaire comprennent des premier (10) et deuxième (11) engrenages planétaires simples, des roues solaires (S3, S4) des premier et deuxième engrenages planétaires simples sont accouplées intégralement, un châssis (CR3) du premier engrenage planétaire simple (10) et une roue annulaire (R4) du deuxième engrenage planétaire simple (11) sont accouplés intégralement l'un à l'autre ainsi qu'à l'élément de sortie, la roue annulaire (R3) du premier engrenage planétaire simple (10) est accouplée à la partie de sortie (8) des unités de roues de changement principal (7, 9), le moyen d'engagement par friction pour changer les chemins de transmission des unités de roues de changement secondaire est muni d'un troisième embrayage (C3) intercalé entre la roue intégralement accouplée châssis/anneau (CR3/R4) et les roues solaires intégralement accouplées (S3, S4), un quatrième frein (B4) pour stopper sélectivement les roues solaires intégralement accouplées (S3, S4), et un cinquième frein (B5) pour stopper sélectivement le châssis (CR4) du deuxième engrenage planétaire simple (11), et le cinquième frein (B5) comprenant un moyen formant frein est agencé sensiblement aligné au deuxième engrenage planétaire simple (11) dans la direction axiale et radialement à l'extérieur de la roue annulaire (R4).

6. Transmission automatique selon la revendication 3 ou 5, dans laquelle la partie étendue (16f) est agencée de manière concentrique avec le deuxième arbre (6), comprenant une partie cannelée de forme sensiblement circulaire pour former une cannelure (a) sur la surface périphérique intérieure, ladite partie de forme sensiblement circulaire est entaillée pour former une partie à entaille (f), une cannelure (72a) formée au niveau de la surface périphérique extérieure des disques de friction extérieurs (72) est ajustée sur ladite partie cannelée, et le troisième arbre (14) est agencé de façon à être opposé à la partie à entaille.
